# EUROPÄISCHE PATENTANMELDUNG

(11) **EP 1 267 177 A1**
(43) Veröffentlichungstag der Anmeldung: **18.12.2002**
(21) Anmeldenummer: 02013171.0
(22) Anmeldetag: 14.06.2002
(51) Int. Cl.: G01S 17/89

(54) **Verfahren und Vorrichtung zur Lokalisierung von Objekten im Raum**

(30) Priorität: 04.07.2001 DE 10132335; 28.09.2001 DE 10148062; 15.06.2001 DE 10128954; 08.11.2001 DE 10154861
(71) Anmelder: IBEO Automobile Sensor GmbH, 22179 Hamburg (DE)
(72) Erfinder: Lages, Ulrich, Dr., 21031 Hamburg (DE); Hipp, Johann, 22391 Hamburg (DE); Krzikalla, Roland, 21073 Hamburg (DE); Kammering, Raimund, 25421 Pinneberg (DE)
(74) Vertreter: Manitz, Finsterwald & Partner GbR

(57) **Zusammenfassung**

Verfahren zur Lokalisierung von Objekten im Raum, bei welchem von einer Sendeeinrichtung Licht-, insbesondere Laserstrahlen in Pulsen ausgesendet und die von den Objekten reflektierten Strahlenpulse mittels einer Empfangseinrichtung mit einem geeigneten Sensor empfangen und hinsichtlich ihrer Laufzeit analysiert werden, wobei der Empfangszeitpunkt insbesondere durch die Mitte der Pulsbreite bei einem unteren Schwellenwert für die Intensität der empfangenen Strahlung bestimmt wird, wobei zur Vermeidung von Fehlinterpretationen aufgrund von sogenannten Geistermessungen die Laufzeiten der Strahlenpulse zusätzlich im Hinblick auf ihren Gradienten analysiert werden und bei Feststellen eines Gradienten, der größer ist als ein hierfür festgelegter Grenzwert, das gleichzeitige Erfassen von zwei hintereinander befindlichen Objekten, eine sogenannte Abrisskante, signalisiert wird.

## Beschreibung

Verfahren zur Lokalisierung von Objekten im Raum, bei welchem von einer Sendeeinrichtung Licht-, insbesondere Laserstrahlen in Pulsen ausgesendet und die von den Objekten reflektierten Strahlenpulse mittels einer Empfangseinrichtung mit einem geeigneten Sensor empfangen und hinsichtlich ihrer Laufzeit analysiert werden, wobei der Empfangszeitpunkt insbesondere durch die Mitte der Pulsbreite bei einem unteren Schwellenwert für die Intensität der empfangenen Strahlung bestimmt wird.

Aufgrund der genannten Art der Bestimmung des Empfangszeitpunkts treten bei derartigen Verfahren und nach diesem Verfahren arbeitenden Vorrichtungen wie Laserscannern oder sogenannten Fixed-Beam-Lasern Probleme auf, wenn sich zwei Objekte hintereinander befinden. Trifft der Lichtstrahl auf den Übergangsbereich zwischen den beiden Objekten, so wird ein Teil des Strahls vom vorderen und ein Teil vom hinteren Objekt reflektiert. Dies führt bei relativ dicht hintereinander befindlichen Objekten dazu, dass sich eine Mischentfernung ergibt, die zwischen der Entfernung der beiden Objekte liegt, wobei die Mischentfernung insbesondere davon abhängig ist, wie groß der Anteil des Laserfleck auf dem jeweiligen Objekt ist. Je größer der Laserfleck auf dem jeweiligen Objekt, desto näher liegt die Mischentfernung an dessen Entfernung.

Derartige Grenzbereiche stören bei der Lokalisierung der Objekte, da sogenannte Geistermessungen, auch Abrisskanten genannt, erzeugt werden, die ein zwischen den beiden Objekten liegendes drittes Objekt vortäuschen.

Der Erfindung liegt die Aufgabe zugrunde, das eingangs genannte Verfahren und die zugehörige Vorrichtung so weiterzubilden, dass diese Probleme nicht auftreten. Insbesondere sollen Fehlinterpretationen aufgrund von sogenannten Geistermessungen verhindert werden.

Diese Aufgabe wird dadurch gelöst, dass die Laufzeiten der Strahlenpulse zusätzlich im Hinblick auf ihren Gradienten analysiert werden und dass bei Feststellen eines Gradienten, der größer ist als ein hierfür festgelegter Grenzwert, das gleichzeitige Erfassen von zwei hintereinander befindlichen Objekten, eine sogenannte Abrisskante, signalisiert wird.

Durch das zusätzliche Analysieren der Laufzeiten der Strahlenpulse im Hinblick auf ihren Gradienten kann das Auftreten der sogenannten Abrisskanten festgestellt werden. Überschreitet der Laufzeitgradient einen hierfür festgelegten Grenzwert, der größer ist als ein bei dem gemessenen Objekt zu erwartender Gradient, so wird erfindungsgemäß darauf geschlossen, dass mit der Messung zwei hintereinander liegende Objekte erfasst wurden. Der erhaltene Messwert ist dadurch als Geistermesswert erkannt und kann entsprechend behandelt werden. Beispielsweise kann der Messwert einfach ignoriert werden.

Eine andere, bevorzugte Möglichkeit besteht darin, den Messwert der Abrisskante dazu zu verwenden, die Lage des Übergangs vom ersten zum zweiten Objekt genau zu bestimmen. Damit kann eine Aussage über die Lage der Objekte erhalten werden, die eine höhere Auflösung aufweisen kann als die Auflösung des Laserscanners. Die Bestimmung der Lage des Übergangs erfolgt dabei insbesondere dadurch, dass die Messdaten der Abrisskante mit den Messdaten benachbarter Messungen verglichen werden.

Insbesondere erfolgt die Bestimmung der Lage des Übergangs unter der Annahme, dass die Entfernung der beiden festgestellten Objekte am Übergang mit dem entsprechenden Wert der dem Übergang nächstliegenden Messung am jeweiligen Objekt übereinstimmt. Es kann dann auf die Lage des Übergangs geschlossen werden, da dieser um so näher am Ort einer der beiden benachbarten Messungen liegt, je näher der gemessene Entfernungswert der Abrisskante am Entfernungswert der anderen benachbarten Messung liegt, und umgekehrt.

Eine noch genauere Bestimmung der Lage des Übergangs kann dadurch ermöglicht werden, dass zusätzlich zur Entfernung auch die Intensität der reflektierten Strahlung gemessen wird, also die Reflektivität der Objekte. Der gemessene Entfernungswert der Abrisskante liegt nämlich um so näher am gemessenen Entfernungswert einer benachbarten Messung, je höher die Reflektivität des zugehörigen Objektes ist. Insgesamt kann daher eine sehr hohe Auflösung erreicht werden.

Der Grenzwert für den Signalgradienten wird bevorzugt für jeden Messwert separat festgelegt, insbesondere in Abhängigkeit von der festgestellten Entfernung des jeweiligen Objektes und/oder dessen Reflektivität. Die Feststellung des Vorliegens einer Abrisskante kann dadurch verbessert werden. Wie der Grenzwert grundsätzlich festzulegen ist, kann empirisch ermittelt werden.

Nach einer weiteren Ausgestaltung der Erfindung wird bei der Entscheidung bezüglich des Vorliegens einer Abrisskante zusätzlich zum Gradienten der Laufzeit weitere Information, beispielsweise die Entwicklung des Gradienten von Messung zu Messung oder die Veränderung der Reflektivität der erfassten Objekte berücksichtigt. Die Erkennung von Abrisskanten kann dadurch verbessert werden. Bei einer Winkelabtastung kann sich nämlich der Gradient bei Messung entlang eines Objektes ändern. Ist die Änderung nicht kontinuierlich sondern macht einen Sprung, so deutet dies auf das Vorhandensein zweier hintereinander liegender Objekte hin. Ebenso ist eine plötzliche Änderung in der Reflektivität des gemessenen Objektes ein Hinweis auf zwei verschiedene Objekte, die unmittelbar hintereinander liegen.

Das erfindungsgemäße Verfahren ist insbesondere bei Laserscannern und sogenannten Fixed-Beam-Lasern anwendbar.

Eine Vorrichtung zur Durchführung des erfindungsgemäßen Verfahrens kann die in den Ansprüchen 8 bis 12 angegebenen Merkmale aufweisen. Das erfindungsgemäße Verfahren wird anhand der beigefügten Zeichnung näher erläutert. Es zeigen, jeweils in schematischer Darstellung,
- Figur 1: die Durchführung einer Entfernungsmessung eines vor einer Wand befindlichen Objektes und
- Fig. 2a bis c: das Messergebnis bei drei verschiedenen Situationen.

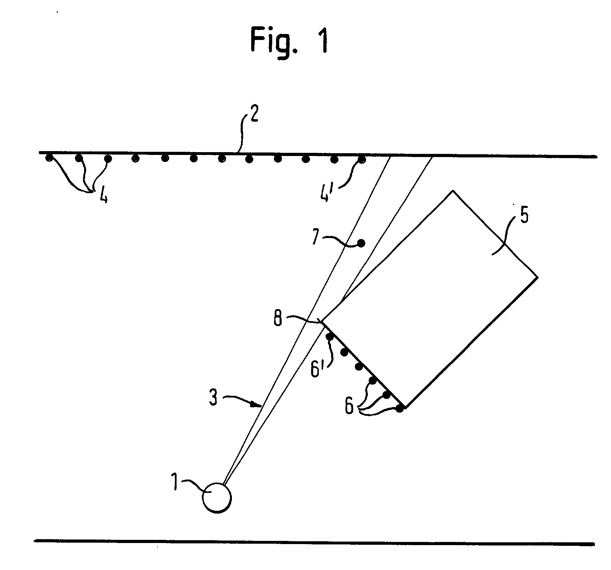

Eine Sendeempfangseinrichtung 1 ist einer Wand 2 gegenüberliegend angeordnet und sendet einen Laserstrahl 3 aus. Die Sendeempfangseinrichtung 1 ist als Laserscanner ausgebildet, der in an sich bekannter Weise den Laserstrahl 3 nacheinander in festen Winkelabständen aussendet. Auf der Wand 2 sind die Lasermesspunkte 4, die der Mitte des divergierenden Laserstrahls 3 entsprechen, dargestellt. Beispielsweise beginnt der Laserscanner 1 auf der in Figur 1 linken Seite der Wand 2 und tastet diese nach rechts ab.

In der rechten Hälfte von Figur 1 ist vor der Wand 2 ein Objekt 5, beispielsweise ein Kraftfahrzeug dargestellt. Die Abtastpunkte 6 des Laserscanners 1 auf dem Objekt 5 sind ebenfalls eingezeichnet. In der dargestellten Ausrichtung des Laserstrahls 3 trifft dieser das Objekt 5 jedoch nur teilweise, während der andere Teil des Laserstrahls auf die dahinterliegende Wand 2 trifft. Dadurch wird ein Objekt an der mit 7 gekennzeichneten Stelle, als sogenannte Abrisskante bezeichnet, vorgespiegelt.

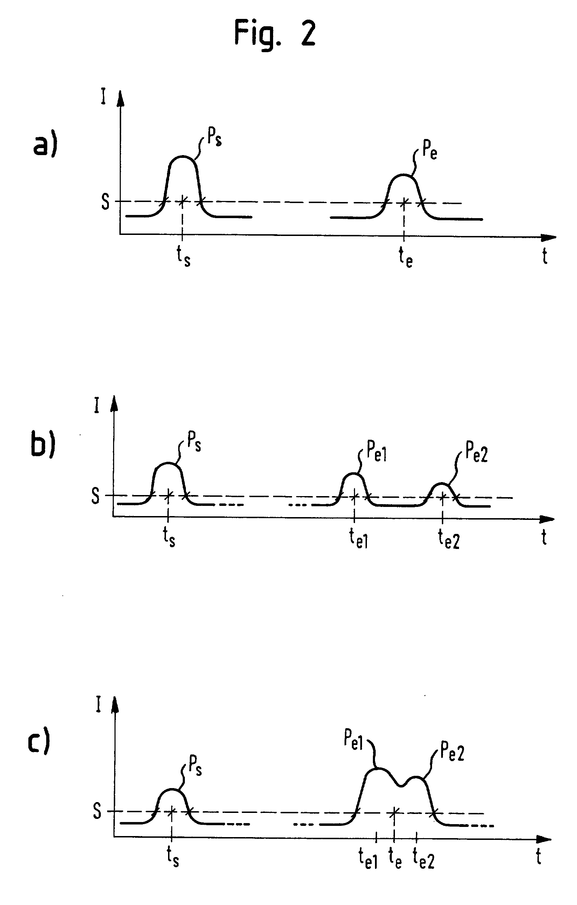

Fig. 2 zeigt das Ergebnis dreier Messungen in unterschiedlichen Situationen, und zwar in einem Diagramm aufgetragen als Strahlintensität über der Zeit. Fig. 2a zeigt die Normalsituation bei Erfassen eines einzigen Objektes. Links im Diagramm ist der Startpuls Pₛ, rechts das Empfangsecho Pₑ eingetragen. Beide stimmen in ihrer Form überein. Lediglich die Intensität des Empfangsechos Pₑ ist etwas kleiner als diejenige des Startpulses Pₛ. Startzeit tₛ und Empfangszeit tₑ werden, wie dargestellt, jeweils durch die Mitte der Pulsbreite bei dem unteren Schwellwert S für die Intensität der Strahlung bestimmt. Das heißt, der jeweilige Zeitpunkt wird auf die Mitte des Zeitabschnittes festgelegt, der mit dem Überschreiten des Schwellwertes S beginnt und mit dem erneuten Unterschreiten des Schwellwertes S endet.

Fig. 2b zeigt die Situation bei gleichzeitigem Erfassen zweier Objekte durch den Laserstrahl, wobei die beiden Objekte einen verhältnismäßig großen Abstand zueinander aufweisen. Die beiden auf der rechten Seite des Diagramms dargestellten Empfangsechos Pₑ₁, Pₑ₂ sind deutlich voneinander getrennt, so dass zwei Messwerte tₑ₁ und tₑ₂ erhalten werden, die jeweils einem der beiden Objekte zugeordnet werden können. Das heißt, hier besteht kein Problem bezüglich der Feststellung zweier verschiedener Objekte, die unmittelbar hintereinander liegen.

Anders ist die Situation bei Fig. 2c. Hier liegen die beiden Objekte so nahe hintereinander, dass sich die Empfangsechos Pₑ₁, Pₑ₂ überlagern, wie rechts in Fig. 2c dargestellt ist. Der Empfänger stellt daher nur eine Empfangszeit tₑ fest, die sich aus dem überlagerten Empfangsecho ergibt und zwischen der tatsächlichen Empfangszeit des ersten Echos Pₑ₁ und des zweiten Echos Pₑ₂ liegt. Die vom Empfänger festgestellte Empfangszeit tₑ liegt dabei um so näher an der tatsächlichen Empfangszeit tₑ₁ des ersten Empfangsechos Pₑ₁, je größer dessen Intensität im Vergleich zur Intensität des zweiten Empfansechos Pₑ₂ ist, da dann die Mitte des Zeitabschnitts zwischen dem Überschreiten des Schwellwertes S und dem Wiederabfallen unter den Schwellwert S näher bei der tatsächlichen Empfangszeit tₑ₁ des ersten Empfangsechos Pₑ₁ liegt. Das heißt, die festgestellte Empfangszeit tₑ liegt um so näher bei der tatsächlichen Empfangszeit tₑ₁ des ersten Empfangsechos Pₑ₁, je mehr von dem ausgesendeten Lichtstrahl auf das nähere Objekt fällt. Um so näher ist dann aber der Übergang zwischen dem näheren Objekt und dem ferneren Objekt am ferneren Objekt. Umgekehrt gilt das entsprechende.

Aus diesem Zusammenhang kann die genaue Lage der Abrisskante 7 bzw. des Übergangs 8 zwischen den beiden Objekten 2, 5 bestimmt werden, wenn man annimmt, dass die Entfernungen der beiden Objekte 2, 5 am Übergang zwischen den beiden Objekten jeweils gleich groß ist wie im benachbarten Bereich, also in dem jeweiligen benachbarten Messpunkt 4' bzw. 6'. Da die Intensität des Empfangechos Pₑ₁, Pₑ₂ zudem von der Reflektivität des jeweiligen Objektes 2, 5 abhängt, wird bevorzugt bei der Auswertung auch die in den Punkten 4' und 6' gemessene Reflektivität der Wand 2 beziehungsweise des Objektes 5 berücksichtigt. Wie man sieht, kann dadurch die Auflösung der Sendeempfangseinrichtung 1 verbessert werden, da der Ort des Übergangs 8 zwischen den Messpunkten 4' und 6' bestimmt werden kann, deren Abstand der eigentlichen Auflösung entspricht.

### Bezugszeichenliste

- 1: Sendeempfangseinrichtung
- 2: Wand
- 3: Laserstrahl
- 4: Messpunkt
- 4': Messpunkt
- 5: Objekt
- 6: Messpunkt
- 6': Messpunkt
- 7: Abrisskante
- 8: Übergang
- Pₑ: Empfangspuls
- Pₑ₁: Empfangspuls
- Pₑ₂: Empfangspuls
- Pₛ: Startpuls
- S: unterer Schwellwert
- tₑ: Empfangszeit
- tₑ₁: Empfangszeit
- tₑ₂: Empfangszeit
- tₛ: Startzeit

## Patentansprüche

1. Verfahren zur Lokalisierung von Objekten (5) im Raum, bei welchem von einer Sendeeinrichtung (1) Licht-, insbesondere Laserstrahlen (3) in Pulsen ausgesendet und die von den Objekten (5) reflektierten Strahlenpulse mittels einer Empfangseinrichtung (1) mit einem geeigneten Sensor empfangen und hinsichtlich ihrer Laufzeit analysiert werden, wobei der Empfangszeitpunkt insbesondere durch die Mitte der Pulsbreite bei einem unteren Schwellenwert für die Intensität der empfangenen Strahlung bestimmt wird,
**dadurch gekennzeichnet,**
**dass** die Laufzeiten der Strahlenpulse zusätzlich im Hinblick auf ihren Gradienten analysiert werden und dass bei Feststellen eines Gradienten, der größer ist als ein hierfür festgelegter Grenzwert, das gleichzeitige Erfassen von zwei hintereinander befindlichen Objekten (2, 5), eine sogenannte Abrisskante (7), signalisiert wird.

2. Verfahren nach Anspruch 1,
**dadurch gekennzeichnet,**
**dass** die genaue Lage des Übergangs (8) vom ersten Objekt (2) zum zweiten Objekt (5) bestimmt wird, insbesondere indem die Messdaten der sogenannten Abrisskante (7) mit den Messdaten benachbarter Messungen verglichen werden.

3. Verfahren nach einem der vorhergehenden Ansprüche,
**dadurch gekennzeichnet,**
**dass** zusätzlich zur Laufzeit die Intensität der reflektierten Strahlen gemessen und durch Vergleich mit der ausgestrahlten Intensität die Reflektivität der erfassten Objekte (2, 5) ermittelt wird, und dass die ermittelte Reflektivität der Objekte (2, 5) bei der Bestimmung der Lage der tatsächlichen Übergangsstelle (8) zwischen den zwei Objekten (2, 5) mit berücksichtigt wird.

4. Verfahren nach Anspruch 2 oder 3,
**dadurch gekennzeichnet,**
**dass** die Bestimmung der Lage des Übergangs (8) unter der Annahme erfolgt, dass die Entfernung und/oder die Reflektivität der beiden festgestellten Objekte (2, 5) am Übergang (8) der beiden Objekte (2, 5) mit den entsprechenden Werten der dem Übergang (8) nächstliegenden Messung am jeweiligen Objekt (2, 5) übereinstimmen.

5. Verfahren nach einem der vorhergehenden Ansprüche,
**dadurch gekennzeichnet,**
**dass** der Grenzwert für den Laufzeitgradienten für jeden Messwert separat festgelegt wird, insbesondere in Abhängigkeit von der festgestellten Entfernung des jeweiligen Objektes (2, 5) und/oder dessen Reflektivität.

6. Verfahren nach einem der vorhergehenden Ansprüche,
**dadurch gekennzeichnet,**
**dass** zusätlich zum Gradienten der Laufzeit weitere Information, beispielsweise die Entwicklung des Gradienten von Messung zu Messung oder die Veränderung der Reflektivität der erfassten Objekte (2, 5), bei der Entscheidung bezüglich des Vorliegens einer Abrisskante (7) berücksichtigt wird.

7. Verfahren nach einem der vorhergehenden Ansprüche,
**dadurch gekennzeichnet,**
**dass** die Lokalisierung der Objekte (2, 5) mittels eines Laserscanners oder eines sogenannten Fixed-Beam-Lasers erfolgt.

8. Vorrichtung zur Lokalisierung von Objekten (2, 5) im Raum mit einer Sendeeinrichtung (1) zum gepulsten Aussenden von Licht-, insbesondere Laserstrahlen, einer Empfangseinrichtung (1) zum Empfangen der von einem Objekt (2, 5) reflektierten Strahlen mit einem geeigneten Sensor und einer Auswerteeinheit zum Feststellen der Laufzeit der Lichtstrahlen, wobei der Empfangszeitpunkt insbesondere durch die Mitte der Pulsbreite bei einem unteren Schwellenwert für die Intensität der empfangenen Strahlen bestimmt wird, insbesondere Laserscanner oder sogenannter Fixed-Beam-Laser,
**dadurch gekennzeichnet,**
**dass** zusätzlich Mittel vorgesehen sind zum Analysieren der Laufzeiten der Strahlenpulse im Hinblick auf ihren Gradienten und zum Signalisieren der Erfassung von zwei hintereinander befindlichen Objekten (2, 5), eine sogenannte Abrisskante (7), bei Feststellen eines Gradienten, der größer ist als ein hierfür festgelegter Grenzwert.

9. Vorrichtung nach Anspruch 8,
**dadurch gekennzeichnet,**
**dass** Mittel vorgesehen sind zur Bestimmung der Lage des Übergangs (8) vom ersten Objekt (2) zum zweiten Objekt (5), insbesondere Mittel, durch welche die Messdaten an der Abrisskante (7) mit den Messdaten benachbarter Messungen vergleichbar sind.

10. Vorrichtung nach Anspruch 8 oder 9,
**dadurch gekennzeichnet,**
**dass** zusätzlich Mittel vorgesehen sind, durch welche die Intensität der reflektierten Strahlen messbar ist und durch welche durch Vergleich mit der ausgestrahlten Intensität die Reflektivität der erfassten Objekte (2, 5) ermittelbar ist, und dass die Mittel zur Bestimmung der Lage des Übergangs (8) zwischen den beiden Objekten (2, 5) zur Berücksichtigung der ermittelten Reflektivität der erfassten Objekte (2, 5) ausgebildet sind.

11. Vorrichtung nach einem der Ansprüche 8 bis 10,
**dadurch gekennzeichnet,**
**dass** Mittel vorgesehen sind zur Festlegung des Grenzwerts für den Laufzeitgradienten separat für jeden Messwert, insbesondere in Abhängigkeit von der festgestellten Entfernung des jeweiligen Objektes (2, 5) und/oder dessen Reflektivität.

12. Vorrichtung nach einem der Ansprüche 8 bis 11,
**dadurch gekennzeichnet,**
**dass** zusätzlich Mittel vorgesehen sind, durch welche weitere Information, beispielsweise die Entwicklung des Gradienten von Messung zu Messung oder die Veränderung der Reflektivität der erfassten Objekte (2, 5), bei der Entscheidung bezüglich des Vorliegens einer Abrisskante (7) berücksichtigbar ist.
